# EUROPÄISCHE PATENTSCHRIFT

(11) **EP 1 207 244 B1**
(45) Veröffentlichungstag und Bekanntmachung des Hinweises auf die Patenterteilung: **08.02.2006**
(21) Anmeldenummer: 01126641.8
(22) Anmeldetag: 08.11.2001
(51) Int. Cl.: E04D 12/00, B32B 37/15, B32B 27/12

(54) **Diffusionsoffene Dachunterspannbahn**
Vapor permeable underroof membrane and method of producing the same
Membrane de sous-toiture perméable à la vapeur et procédé de fabrication

(30) Priorität: 17.11.2000 DE 10057149
(43) Veröffentlichungstag der Anmeldung: 22.05.2002
(73) Patentinhaber: Klöber GmbH & Co. KG, 58256 Ennepetal (DE)
(72) Erfinder: Klein, Hans-Georg, 42477 Radevormwald (DE)
(74) Vertreter: Grundmann, Dirk

(56) Entgegenhaltungen:
- EP-A- 0 761 715
- DE-A- 19 725 451
- DE-U- 29 811 128
- US-A- 5 506 024
- US-A- 5 989 697

## Beschreibung

Die Erfindung betrifft eine diffusionsoffene Dachunterspannbahn mit einem flächigen Träger, beispielsweise einem Tragvlies, welcher zufolge einer auf dem Träger aufgebrachten Membran luftstrom- und wasserdicht aber wasserdampfdurchlässig ist.

Dachunterspannbahnen bzw. -unterdeckungen werden auf Dächern unterhalb der Ziegel oder anderer Eindeckmaterialien ausgelegt, um einen zusätzlichen Schutz der darunter befindlichen Dämmmaterialien gegen Feuchtigkeit, Staub, Flugschnee und Wind zu bieten. Außerdem sollen sie Feuchtigkeit (eingebaute Feuchte, Tauwasser, Lekagenfeuchte) nach außen mit geringstmöglichen Widerstand als Wasserdampf durch Diffusion lassen. Ferner wünscht man sich während der nicht eingedeckte Bauphase eine Noteindeckung, die auch von der Unterspannbahn verwirklicht wird. Bekannt sind diffusionsoffene Dachunterspannbahnen als Einlagenprodukt auf Basis eines HDPE-Spinnvlieses. Es sind auch Zwei- und Mehrlagenprodukte mit einem PP- oder PE-Film als Membran bekannt. Die Membran wird thermisch mit dem Träger beispielsweise durch einen Kleber verbunden. Es sind auch Zweilagenprodukte mit Plastisolbeschichtungen auf der Basis PUR, PA oder Copolymerisaten derselben bekannt. Ferner sind Dreilagenprodukte mit Polyester oder Polyesterblockamidfolien bekannt.

Eine gattungsemäße diffusionsoffene Dachunterspannbahn wird in der DE 298 11 128 U1 beschrieben. Der Träger ist dort ein Vlies. Auf das Vlies wird eine thermoplastische Elastomerschicht gebracht, die mit dem Vlies innig verbunden ist. Als thermoplastische Elastomere werden Polyester, Polyurethane, Polyetheremide und Polyetherarmid-Blockcopolymere genannt.

Die US 5,506,024 beschreibt einen wasserdurchlässigen Film aus Polyetheresteramid. Ein derartiger Film soll wasserdampfdurchlässig sein. Der Film soll durch Wärmebeaufschlagung oder mit Hilfe eines Klebers auf ein Substrat, beispielsweise eine Textilie aufgebracht werden, um so als Dachunterspannbahn verwendet werden zu können.

Die WO 97/30244 zeigt beispielsweise eine diffusionsoffene Dachunterspannbahn und ein Verfahren zum Herstellen derselben.

Der Erfindung liegt die Aufgabe zugrunde, eine einfach herzustellende und dennoch gebrauchstaugliche Dachunter-spannbahn sowie ein Verfahren zur Herstellung einer solchen anzugeben.

Gelöst wird die Aufgabe durch die in den Ansprüchen angegeben Erfindung.

Der Anspruch 1 löst die gestellte Aufgabe zunächst und im Wesentlichen dadurch, dass die Membran ein heiß unmittelbar auf den Träger aufgebrachter Heiß-Schmelz-Klebefilm ist. Erfindungsgemäß kann auf einen gesonderten Kleber verzichtet werden, da die Membran vom Kleber selbst ausgebildet wird. Anders als beim Stand der Technik wird der Heiß-Kleber aber als Film auf den Träger aufgebracht. Das Aufbringen erfolgt im heißen Zustand, so dass eine flächige, innige Verbindung zwischen Heiß-Kleberfilm und Träger erfolgt. Bei dem Träger handelt es sich bevorzugt um einen luftdurchlässigen oder luftdurchlässig gemachten, flächigen Körper, beispielsweise ein Vlies. Der Träger kann aus PP, PET oder PE bestehen. Überraschend hat sich gezeigt, dass durch das bloße Aufkaschieren des filmförmigen Klebers wasserdampfdurchlässigkeiten von mehr als 120 g /m²/24 Stunden erreicht werden. Der Träger kann dabei ein textiles Vlies mit einem Flächengewicht von 10 bis 150 g/m² sein. Besonders vorteilhaft wird es angesehen, wenn der Heiß-Klebefilm in die Zwischenräume des zerklüfteten Trägers eingedrückt wird. Durch diese Maßnahme kann die Wasserdampfdurchlässigkeit noch einmal um einen Faktor 6 gesteigert werden. Vorteilhaft ist es ferner, wenn der Heiß-Kleber bis in Hohlräume des Trägers eindringt. Dann können die einzelnen Fasern eines Trägervlieses verklebt werden. Der Heiß-Schmelz-Klebefilm kann zwischen zwei wasser- und dampfdurchlässigen Trägermaterialien, beispielsweise textilen Vliesen liegen. Ein Vlies bildet dann ein Tragvlies. Das andere bildet ein Deckvlies. Die Materialeigenschaften des Heiß-Schmelz-Klebers sind vorzugsweise so gewählt, dass eine Oberflächenspannung von weniger als 20 mN/m erzielt ist. In einer Weiterbildung der Erfindung kann zwischen Deckvlies und Heiß-Schmelz-Klebefilm ein Armierungsgitter angeordnet sein. Das Deckvlies oder der Heiß-Schmelz-Klebefilm kann zudem mit Metallplättchen oder Glaskugelstaub belegt sein. Es ist aber auch möglich, das Deckvlies oder den Heiß-Schmelz-Klebefilm mit Aluminum zu bedampfen. Ferner kann in dem Heiß-Schmelz-Klebefilm ein SAP eingebettet oder einseitig aufgebracht sein. Zum Beispiel extrem expandierbare, gelbildende und vernetzende Acrylsäurepolymere.

Die Erfindung betrifft ferner ein Verfahren zum Herstellen einer derartigen Dachunterspannbahn, wobei kontinuierlich auf einen Tragkörper, beispielsweise ein Tragvlies eine Membran aufgebracht wird. Erfindungsgemäß ist vorgesehen, dass auf den Träger unmittelbar ein spaltextrudierter Film aus einem Heiß-Schmelz-Kleber aufgebracht wird. Träger und Film können dabei einen Walzenspalt gemeinsam durchlaufen. Die Walzen können einen Andruck ausüben, so dass der Film in die Hohlräume des Trägers eingepresst wird. Bevorzugt können die Walzen oder nur eine Walze eine Prägestruktur aufweisen. In einer Weiterbildung der Erfindung ist vorgesehen, dass zusammen mit dem Film und dem Träger ein Deckvlies und/oder ein Armierungsgitter mit in den Walzenspalt einlaufen, so dass eine Mehrschichtstruktur gefertigt wird.

Die Erfindung betrifft ferner einen Dämmkörper, welcher aus einem Dämmstoff besteht, auf welchem einseitig eine diffusionsoffene Dachunterspannbahn aufkaschiert ist. Erfindungsgemäß handelt es sich dabei um eine Dachunterspann, bei der die Membran ein heiß unmittelbar auf den Träger aufgebrachter Heiß-Schmelz-Klebefilm ist, wobei der Heiß-Schmelz-Klebefilm durch Wärme reaktivierbar ist.

Ausführungsbeispiele der Erfindung werden nachfolgend anhand beigefügter Zeichnungen im Detail erläutert. Es zeigen:
- Fig. 1: ein erstes Ausführungsbeispiel einer erfindungsgemäßen diffusionsoffene Dachunterspannbahn, grob schematisiert im Querschnitt,
- Fig. 2: eine Darstellung gemäß Fig. 1 eines zweiten Ausführungsbeispiels,
- Fig. 3: eine Darstellung gemäß Fig. 1 eines dritten Ausführungsbeispiels,
- Fig. 4: die grob schematisierte Darstellung eines ersten Fertigungsverfahrens,
- Fig. 5: eine grob schematisierte Darstellung eines Fertigungsverfahrens für das zweite Ausführungsbeispiel,
- Fig. 6: eine Variation des Fertigungsverfahrens gemäß Fig. 5,
- Fig. 7: eine weitere Variation des Fertigungsverfahrens und
- Fig. 8: ein weiteres Ausführungsbeispiel einer diffusionsoffenen Dachunterspannbahn.

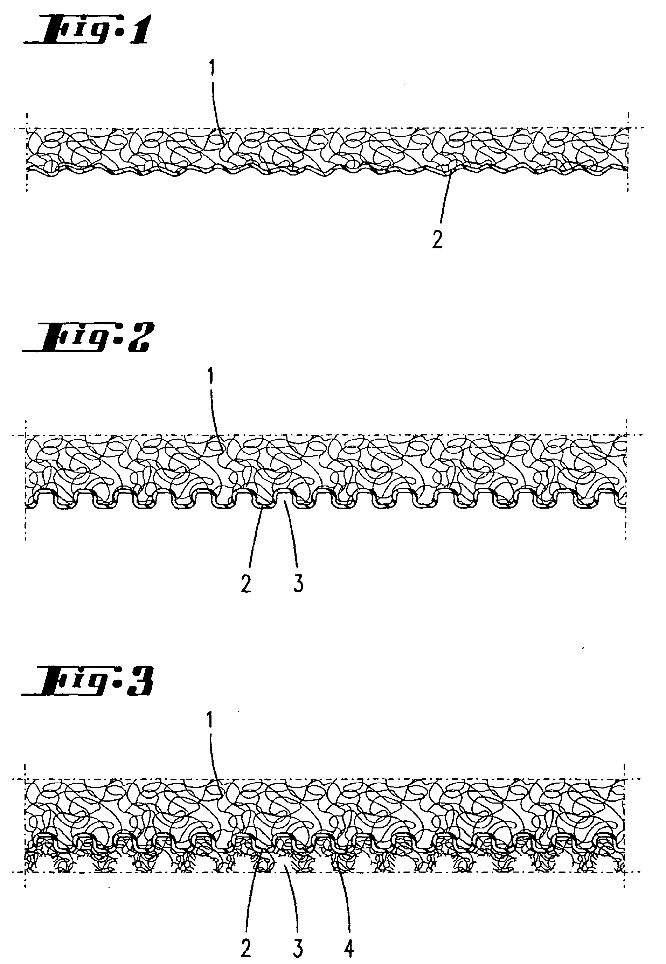

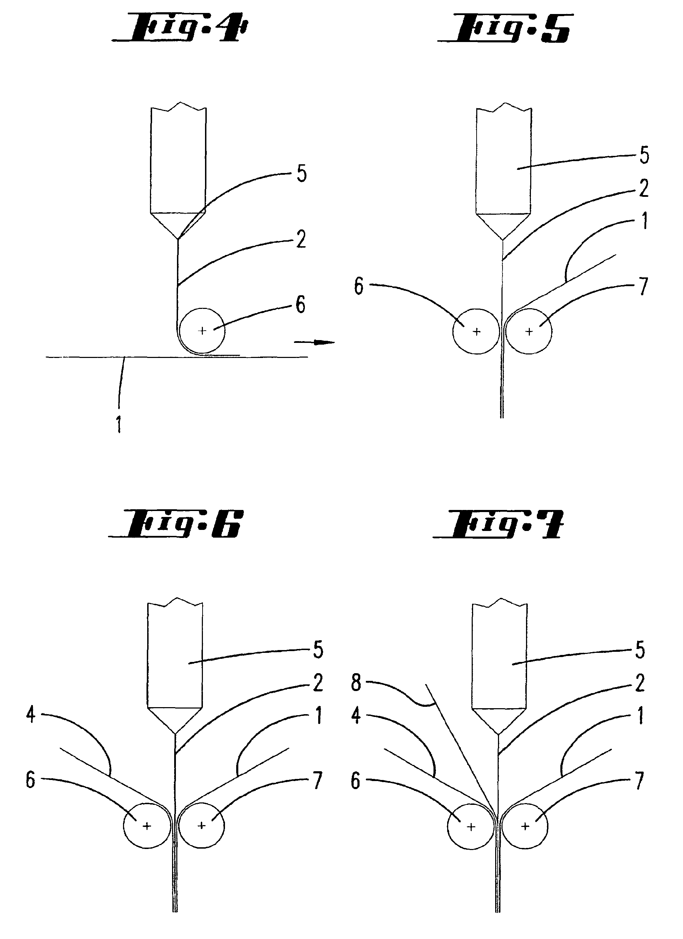

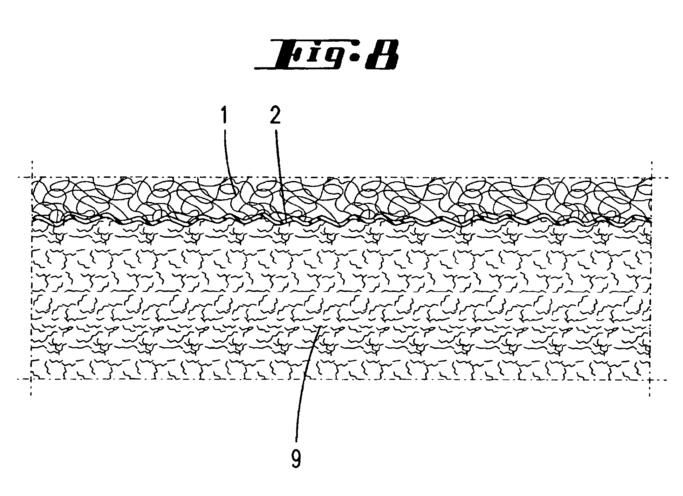

Das in der Figur 1 dargestellte Ausführungsbeispiel besteht aus einem textilen Trägervlies 1, auf welchem ein Heiß-Schmelz-Klebefilm 2 unmittelbar im noch heißem Zustand des Filmes 2 aufgebracht ist. Das Aufbringen des Heiß-Schmelz-Klebefilms 2 auf das Tragvlies kann beispielsweise entsprechend der Figur 4 erfolgen. Dabei tritt der Heiß-Schmelz-Klebefilm 2 aus einer spaltförmigen Extrusionsdüse 5 kontinuierlich aus und wird mittels einer Walze 6 umgelenkt und auf die Oberfläche eines Tragvlieses 1 aufgelegt. Der Heiß-Schmelz-Klebefilm verklebt dann mit den Fasern des Tragvlieses 1 und bildet einen wasserdampfdurchlässige aber luft- und wasserundurchlässige Membran aus. Das in Figur 1 dargestellte Ausführungsbeispiel kann eine Wasserdampfdurchlässigkeit von mehr als 120 g/m²/24 Stunden aufweisen. Die Wasserdichtigkeit ist mindestens bis zu einer Wassersäule von 1 m gegeben. Es reicht dabei aus, wenn das Flächengewicht des aufgebrachten Filmes 20g/m² ist. Das Auftragsgewicht kann zwischen 5-100g/m², bevorzugt 10-40g/m² variieren.

Bei dem in Figur 2 dargestellten Ausführungsbeispiel besitzt das Tragvlies 1 Prägungen 3 bzw. Hohlräume. Der Heiß-Schmelz-Klebefilm 2 dringt bis in die Prägungen 3 bzw. Hohlräume 1 ein. Die Fertigung kann mit einer in der Figur 5 schematisch dargestellten Vorrichtung erfolgen. Auch hier wird der Heiß-Schmelz-Klebe-Film 2 aus einer Extrusionsdüse 5 in Form eines Spaltes extrudiert und wird auf ein Tragvlies 1 aufgebracht. Dies erfolgt in einem Spalt zwischen zwei parallel zueinander liegenden Walzen 6, 7, in welchen das Tragvlies 1 und der heiße Heiß-Schmelz-Klebefilm kontinuierlich einlaufen. Die Walzen 6, 7 üben einen Anpressdruck auf den Heiß-Schmelz-Klebefilm 2 bzw. das Tragvlies 1 aus, so dass eine innige Verbindung zwischen Film 2 und Tragvlies 1 erfolgt. Wenn bei diesem Ausführungsbeispiel eine der beiden Walzen 6, 7 eine Gravur, beispielsweise in Form einer Noppenprägung aufweisen, so bilden sich bei der fertigen Dachunterspannbahn Einprägungen 3, in welche der Heiß-Schmelz-Klebefilm 2 eindringt. Derartig gefertigte Dachunterspannbahnen haben eine erheblich höher Wasserdampdurchlässigkeit, sie kann mehr als 700 g/m²/24 Stunden betragen. Es sind sogar Wasserdampfdurchlässigkeiten von bis zu 830 g/m²/24 Stunden erreichbar.

Mit dem beschriebenen Verfahren lassen sich erfindungsgemäße Dachunterspannbahnen fertigen, bei denen der SD-Wert < 0,3 m beträgt bei einer Wassersäule von > 2 m. Die Materialien sind so gewählt, dass die Unterspannbahn mindestens normal entflammbar ist. Die Oberflächenspannung kann < 20 mN/m betragen. Somit ist eine Durchfeuchtung bei Kontakt mit tensidhaltigen Holzschutzmitteln vermieden. Bei einer Frei-Bewitterung von 4 Monaten tritt kein Abfall der Eigenschaften auf.

Bei dem in der Figur 3 dargestellten Ausführungsbeispiel läuft neben dem Film 2 und dem Tragvlies 1 ein Deckvlies 4 auf der Filmseite mit in den Walzenspalt ein, so dass der Heiß-Schmelz-Klebefilm 2 zwischen dem Tragvlies 1 und dem Deckvlies 4 liegt. Deckvlies und Tragvlies können jeweils von textilen Vliesen mit Flächengewichten zwischen 10 und 150 g/m² gebildet werden.

In einer Weiterbildung der Erfindung kann vorgesehen sein, dass zusätzlich zu dem Deckvlies auch ein Armierungsgitter 8 mit in den Walzenspalt einläuft. Das Armierungsgitter 8 liegt dann zwischen Deckvlies 4 und Heiß-Schmelz-Klebefilm 2.

In einer Weiterbildung der Erfindung kann der Heiß-Schmelz-Klebefilm mit Metallplättchen versetzt sein oder mit Aluminium vakuum-bedampft sein. Es ist auch möglich, das obere Deckvlies 4 mit Aluminium vakuum-zubedampfen.

In einer nicht dargestellten Weiterbildung der Erfindung kann die Dachunterspannbahn auf ein Abstandsgitter aufgeklebt werden. Dies kann durch thermische Reaktivierung des Heiß-Schmelz-Klebers 2 erfolgen. Ein derartiges mit einer Dachunterspannbahn versehenes Abstandsgitter kann beispielsweise als diffusionsoffene Trennlage für Stehfalzdächer verwendet werden.

Als Weiterbildung ist ferner vorgesehen, dass dem Heiß-Schmelz-Klebefilm ein SAP (z.B extrem expandierbare, gelbildende und vernetzende Acrylsäurepolymere) eingebettet oder einseitig aufgebracht ist. Ferner ist vorgesehen, dass auf dem Heiß-Schmelz-Klebefilm Glaskugelstaub in Form von Hohlkugeln (Silicate, Alkasilicate) eingebettet/aufgebracht sind. Dieser Glaskugelstaub kann zum Beispiel Flugstaub als Abfallprodukt aus Kohlekraftwerken mit Schmelzfeuerung sein.

Bei dem in Figur 8 dargestellten Ausführungsbeispiel ist ebenfalls eine diffusionsoffene Dachunterspannbahn gemäß Figur 2 mit einem thermisch reaktivierbaren Heiß-Schmelz-Klebefilm versehen. Diese Dachunterspannbahn ist auf einen Dämmstoff 9 dadurch aufgeklebt, dass der Heiß-Schmelz-Klebefilm 2 durch Erhitzen reaktiviert worden ist.

## Patentansprüche

1. Diffusionsoffene Dachunterspannbahn mit einem flächigen Träger (1), beispielsweise ein Vlies, welcher zufolge einer heiß unmittelbar auf dem Träger (1) aufgebrachten Membran (2) luftstrom- und wasserdicht aber wasserdampfdurchlässig ist, **dadurch gekennzeichnet, dass** die Membran ein Heiß-Schmelz-Klebefilm (2) ist.

2. Diffusionsoffene Dachunterspannbahn nach Anspruch 1, **dadurch gekennzeichnet, dass** der Heiß-Schmelz-Klebefilm (2) aus EVA, PA, PVAL, PUR besteht.

3. Diffusionsoffene Dachunterspannbahn nach einem der vorhergehenden Ansprüche, **dadurch gekennzeichnet, dass** der Träger (1) aus PP, PET oder PE besteht.

4. Diffusionsoffene Dachunterspannbahn nach einem der vorhergehenden Ansprüche, **dadurch gekennzeichnet, dass** der Träger (2) ein textiles Vlies mit einem Flächengewicht von 10 bis 150 g/m² ist.

5. Diffusionsoffene Dachunterspannbahn nach einem der vorhergehenden Ansprüche, **dadurch gekennzeichnet, dass** der Heiß-Schmelz-Kiebefilm (2) in Zwischenräume (3) des Trägers (2) eingedrückt ist.

6. Diffusionsoffene Dachunterspannbahn nach einem der vorhergehenden Ansprüche, **gekennzeichnet durch** in Hohlräume des Trägers (1) eingedrungenen Heiß-Schmelz-Kleber (2).

7. Diffusionsoffene Dachunterspannbahn nach einem der vorhergehenden Ansprüche, **gekennzeichnet durch** einen SD-Wert der Dachunterspannbahn von < 0,3 m.

8. Diffusionsoffene Dachunterspannbahn nach einem der vorhergehenden Ansprüche, **gekennzeichnet durch** eine Oberflächen-Spannung des Heiß-Schmelz-Klebefilm von < 20mN/m.

9. Diffusionsoffene Dachunterspannbahn nach einem der vorhergehenden Ansprüche, **gekennzeichnet durch** ein auf den Heiß-Schmelz-Klebefilm (2) aufgebrachtes Deckvlies (4).

10. Diffusionsoffene Dachunterspannbahn nach einem der vorhergehenden Ansprüche, **dadurch gekennzeichnet, dass** der Heiß-Schmelz-Klebefilm (2) und/ oder das Deckvlies (4) mit Metallplättchen versetzt sind oder aluminiumbeschichtet sind.

11. Diffusionsoffene Dachunterspannbahn nach einem der vorhergehenden Ansprüche, **gekennzeichnet durch** ein auf den Heiß Schmelz-Klebefilm (2) aufgebrachtes Armierungsgitter (8).

12. Diffusionsoffene Dachunterspannbahn nach einem der vorhergehenden Ansprüche, **gekennzeichnet durch** ein in dem Heiß-Schmelz-Klebefilm (2) eingebettetes SAP.

13. Diffusionsoffene Dachunterspannbahn nach einem der vorhergehenden Ansprüche, **gekennzeichnet durch** in den Heiß-Schmelz-Klebefilm eingebetteten Glaskugelstaub.

14. Diffusionsoffene Dachunterspannbahn nach einem der vorhergehenden Ansprüche, **gekennzeichnet durch** ein thermisch reaktivierbaren Heiß-Schmelz-Klebefilm (2), mit welchem die Dachunterspannbahn auf ein Abstandsgitter oder einen Dämmstoff aufbringbar ist.

15. Einseitig mit einer diffusionsoffenen Dachunterspannbahn beschichteten Dämmkörper (9) wobei die Dachunterspannbahn einen flächigen Träger (1), beispielsweise ein Vlies aufweist, welcher zufolge einer auf den Träger (1) aufgebrachten Membran (2) luftstrom- und wasserdicht aber wasserdampfdurchlässig ist, **dadurch gekennzeichnet, dass** die Membran ein heiß unmittelbar auf den Träger (2) aufgebrachter Heiß-Schmelz-Klebefilm (2) ist.

16. Verfahren zum Herstellen einer Dachunterspannbahn gemäß einem der vorhergehenden Ansprüche, wobei kontinuierlich auf einen Träger (1), beispielsweise ein Vlies (2) eine Membran (1) aufgebracht wird, **dadurch gekennzeichnet, dass** auf den Träger (1) unmittelbar ein spaltextrudierter Film (2) aus einem Heiß-Schmelz-Kleber aufgebracht wird.

17. Verfahren nach Anspruch 16 oder insbesondere danach, **dadurch gekennzeichnet, dass** der Träger (1) und der Film (2) durch einen Walzenspalt (6, 7) laufen.

18. Verfahren nach Anspruch 17, **dadurch gekennzeichnet, dass** der Film (2) zufolge Walzenandruck in die Hohlräume (3) des Trägers (2) eingepresst wird.

19. Verfahren nach Anspruch 17 oder 18, **dadurch gekennzeichnet, dass** eine der beiden Walzen (6, 7) eine Prägestruktur aufweist/aufweisen.

20. Verfahren nach einem der Ansprüche 17,18 oder 19, **dadurch gekennzeichnet, dass** zusammen mit dem Film (2) und dem Träger (1) ein Deckvlies (4) und/oder ein Armierungsgitter (8) in den Walzenspalt einläuft.

## Claims

1. Vapour-permeable under-roof membrane with a flat substrate (1), for example a non-woven fabric which is air and watertight, but permeable to water vapour because of a membrane (2) applied hot directly to the substrate (1), **characterised in that** the membrane is a hot-melt adhesive film (2).

2. Vapour-permeable under-roof membrane according to claim 1, **characterised in that** the hot-melt adhesive film (2) consists of DVA, PA, PVAL, PUR.

3. Vapour-permeable under-roof membrane according to one of the preceding claims, **characterised in that** the substrate (1) consists of PP, PET or PE.

4. Vapour-permeable under-roof membrane according to one of the preceding claims, **characterised in that** the substrate (2) is a textile non-woven fabric with a weight per unit area of 10 to 150 g/m².

5. Vapour-permeable under-roof membrane according to one of the preceding claims, **characterised in that** the hot-melt adhesive film (2) is forced into interstices (3) in the substrate (2).

6. Vapour-permeable under-roof membrane according to one of the preceding claims, **characterised by** hot-melt adhesive penetrating into the cavities in the substrate (1).

7. Vapour-permeable under-roof membrane according to one of the preceding claims, **characterised by** an SD value of the under-roof membrane of < 0.3 m.

8. Vapour-permeable under-roof membrane according to one of the preceding claims, **characterised by** a surface tension of the hot-melt adhesive film of < 20 mN/m.

9. Vapour-permeable under-roof membrane according to one of the preceding claims, **characterised by** a covering fabric (4) applied to the hot-melt adhesive film (2).

10. Vapour-permeable under-roof membrane according to one of the preceding claims, **characterised in that** the hot-melt adhesive film (2) and/or the covering fabric (4) are mixed with metal platelets or are aluminium coated.

11. Vapour-permeable under-roof membrane according to one of the preceding claims, **characterised by** a reinforcing lattice (8) applied to the hot-melt adhesive film (2).

12. Vapour-permeable under-roof membrane according to one of the preceding claims, **characterised by** an SAP embedded in the hot-melt adhesive film (2).

13. Vapour-permeable under-roof membrane according to one of the preceding claims, **characterised by** glass ball dust embedded in the hot-melt adhesive film.

14. Vapour-permeable under-roof membrane according to one of the preceding claims,
**characterised by** a hot-melt adhesive film (2) which can be thermally reactivated and with which the under-roof membrane can be applied to a spacer lattice or insulating material.

15. Insulating body (9) coated with a vapour-permeable under-roof membrane on one side, wherein the under-roof membrane exhibits a flat substrate (1), for example a non-woven fabric which, because of a membrane (2) applied to the substrate (1), is air- and watertight but is water vapour permeable, **characterised in that** the membrane is a hot-melt adhesive film (2) applied hot directly to the substrate (2).

16. Method for manufacturing an under-roof membrane according to one of the preceding claims, wherein a membrane (1) is applied continuously to a substrate (1), for example a non-woven fabric (2), **characterised in that** a gap extruded film (2) is applied directly to the substrate (1) from a hot-melt adhesive.

17. Method according to claim 16, or in particular according to this claim, **characterised in that** the substrate (1) and the film (2) run through a roll gap (6, 7).

18. Method according to claim 17, **characterised in that** the film (2) is forced into the cavities (3) in the substrate (2) due to roll contact pressure.

19. Method according to daim 17 or 18, **characterised in that** one of the two rolls (6, 7) exhibits/exhibit an embossed structure.

20. Method according to one of claims 17, 18 or 19, **characterised in that** a non-woven covering fabric (4) and/or a reinforcing lattice (8) runs into the roll gap together with the film (2) and the substrate (1).

## Revendications

1. Ecran de sous-toiture à porosité ouverte ayant un support en nappe (1), par exemple un voile non tissé, qui est étanche au courant d'air et à l'eau, mais perméable à la vapeur d'eau, grâce à une membrane (2) déposée à chaud immédiatement sur le support (1), **caractérisé en ce que** la membrane est un film adhésif thermofusible (2).

2. Ecran de sous-toiture à porosité ouverte selon la revendication 1, **caractérisé en ce que** le film adhésif thermofusible (2) est constitué de EVA, PA, PVAL, PUR.

3. Ecran de sous-toiture à porosité ouverte selon l'une des revendications précédentes, **caractérisé en ce que** le support (1) est constitué de PP, PET ou PE.

4. Ecran de sous-toiture à porosité ouverte selon l'une des revendications précédentes, **caractérisé en ce que** le support (1) est un voile non tissé textile ayant un grammage de 10 à 150 g/m².

5. Ecran de sous-toiture à porosité ouverte selon l'une des revendications précédentes, **caractérisé en ce que** le film adhésif thermofusible (2) est pressé dans les interstices (3) du support (1).

6. Ecran de sous-toiture à porosité ouverte selon l'une des revendications précédentes, **caractérisé par** le film adhésif thermofusible (2) qui a pénétré dans les cavités du support (1).

7. Ecran de sous-toiture à porosité ouverte selon l'une des revendications précédentes, **caractérisé en** par une valeur Sd de l'écran de sous-toiture de < 0,3 m.

8. Ecran de sous-toiture à porosité ouverte selon l'une des revendications précédentes, **caractérisé par** une tension superficielle du film adhésif thermofusible de < 20 mN/m.

9. Ecran de sous-toiture à porosité ouverte selon l'une des revendications précédentes, **caractérisé par** le voile non tissé de recouvrement (4) déposé sur le film adhésif thermofusible (2).

10. Ecran de sous-toiture à porosité ouverte selon l'une des revendications précédentes, **caractérisé en ce que** le film adhésif thermofusible (2) et/ou le voile non tissé de recouvrement (4) sont dotés de paillettes métalliques ou sont revêtus d'aluminium.

11. Ecran de sous-toiture à porosité ouverte selon l'une des revendications précédentes, **caractérisé par** une armature (8) déposée sur un film adhésif thermofusible (2).

12. Ecran de sous-toiture à porosité ouverte selon l'une des revendications précédentes, **caractérisé par** un SAP incorporé dans le film adhésif thermofusible (2).

13. Ecran de sous-toiture à porosité ouverte selon l'une des revendications précédentes, **caractérisé par** la poussière de billes de verre incorporée dans le film adhésif thermofusible.

14. Ecran de sous-toiture à porosité ouverte selon l'une des revendications précédentes, **caractérisé par** un film adhésif thermofusible (2) pouvant être réactivé thermiquement, avec lequel l'écran de sous-toiture peut être déposé sur une grille d'écartement ou une matière isolante.

15. Corps isolant (9) revêtu sur une face d'un écran de sous-toiture à porosité de diffusion ouverte, dans lequel l'écran de sous-toiture présente un support en nappe (1), par exemple un voile non tissé, qui est étanche au courant d'air et à l'eau, mais perméable à la vapeur d'eau, grâce à une membrane (2) déposée sur le support (1), **caractérisé en ce que** la membrane est un film adhésif thermofusible (2) déposé immédiatement à chaud sur le support (1).

16. Procédé de fabrication d'un écran de sous-toiture selon l'une des revendications précédentes, dans lequel une membrane est déposée en continu sur un support (1), par exemple un voile non tissé, **caractérisé en ce qu'**un film (2) extrudé par une fente, constitué d'un adhésif thermofusible, est immédiatement déposé sur le support (1).

17. Procédé selon la revendication 16 ou en particulier selon celle-ci, **caractérisé en ce que** le support (1) et le film (2) passent dans un espacement entre cylindres (6, 7).

18. Procédé selon la revendication 17, **caractérisé en ce que** le film (2) est pressé dans les cavités (3) du support (1) par compression par des cylindres.

19. Procédé selon la revendication 17 ou 18, **caractérisé en ce qu'**un des deux cylindres (6, 7) présente une structure gaufrée.

20. Procédé selon l'une des revendications 17, 18 ou 19, **caractérisé en ce qu'**un voile non tissé de recouvrement (4) et/ou une armature (8) s'enfilent dans l'espacement entre cylindres conjointement avec le film (2) et le support (1).
